# EUROPEAN PATENT SPECIFICATION

(11) **EP 0 459 527 B1**
(45) Date of publication and mention of the grant of the patent: **09.08.1995**
(21) Application number: 91110251.5
(22) Date of filing: 21.11.1985
(51) Int. Cl.: G05B 19/04, G05B 19/418

(54) **Centralized control method for a system having a host computer and a plurality of looms controlled by control data from said host computer**
Verfahren zur zentralisierten Steuerung eines Systems mit einem Hauptrecher und mehreren Webstuhlmaschinen, gesteuert durch Steuerungsdaten von diesem Hauptrechner
Méthode de commande centralisée pour un système ayant un ordinateur principal et plusieurs métiers à tisser commandés par des données de commande provenant dudit ordinateur principal

(30) Priority: 20.11.1984 JP 243499/84; 04.12.1984 JP 257238/84; 02.04.1985 JP 68497/85; 09.04.1985 JP 73507/85; 09.04.1985 JP 73510/85
(43) Date of publication of application: 04.12.1991
(62) Divisional of application: 85114810.6
(73) Proprietor: Tsudakoma Corporation, Kanazawa-shi Ishikawa-ken 921 (JP)
(72) Inventor: Sainen, Tsutomu, Kanazawa-shi, Ishikawa-ken 921 (JP); Sakano, Toshiyuki, Kanazawa-shi, Ishikawa-ken 920 (JP); Asai, Takeshi, Kanazawa-shi, Ishikawa-ken 921 (JP); Maenaka Koyu, Mattou-shi, Ishikawa-ken 921 (JP)
(74) Representative: Goddar, Heinz J., Dr.

(56) References cited:
- GB-A- 1 591 522
- GB-A- 2 015 775
- GB-A- 2 082 347
- US-A- 4 281 379

## Description

The present invention relates to a method for centralizing and controlling a plurality of looms, and more particularly to that for preparing weaving conditions by trial weaving, and storing, reading, and transferring control data bearing the weaving conditions after completing the preparation, and further means for changing contol data at need after the preparation.

A monitoring system is known up to now as a system to connect many looms with a control computer. The monitoring system collects data of the rates of operations of respective looms and display them for every looms, but it does not directly control the respective looms.

By contrast, upon actually operating looms, for example, air jet looms, the respective looms require many control parameters such as a number of RPM of a prime motor of the loom, a number of beatings, tension of a warp yarn, on/off timing of each nozzle, and pressure of air for weft insertion, etc. In an ordinarily weaving factory, many looms, not one loom, from several teas to several hundreds thereof are operated. Moreover, they must often weave the same products. However, provided that the same many data are then set for every looms, working efficiency is lowered and requires much times to be needed.

So, a centralized control system may be profitably employed, in which a host computer is placed on the center of the factory, and control parameters previously stored in the computer are delivered to control units of respective looms only by entering a product number. Namely, with control parameters for every products stored and kept in the host central computer, a required control data in need can be immediately set to the control devices of the respective looms upon starting to weave any fabric.

Then, the recent textile weaving industry intends to obtain highly value-added fabrics, and thus development for yielding new products has been increasing needed. In such a developmental process, the optimum weaving conditions must be determined ordinarily with use of one loom as a trial one while changing control conditions of looms. In the instance, a general-purpose centralized control system as described above may lower rather than raise efficiency of the trial weaving.

In addition, another centralized control device for looms is conventionally known in which control data provided with symbols showing fabric specifications (a number of RPM of a prime motor of a loom, number of beatings, warp tension, and weaving density) are previously registered for every kinds of fabrics, and a required control data is delivered to all the looms to permit the looms to be automatically set by designating a symbol showing a fabric specification.

In such prior devices, a data to be registered is in general an average one commonly usable for all the looms. Accordingly, provided that individual looms change in inherent characteristics thereof, the looms can not be operated respectively as desired with the average registered data. Prior arts suffer from these problems.

In addition, in the prior weaving techniques, upon weaving a new fabric, only a single loom is operated as a testing machine to estimate the optimum control condition while changing for trial weaving many control parameters such for example as a number of RPM of a prime power mover motor of a loom, a number of beatings, warp yarn tensions, on/off timing of each nozzle for weft insertion, etc. In such trial weaving, an operator first provides certain condition to a loom based on his past experiences and perception, starts weaving, evaluates the results in succession, to estimate the optimum condition with trial and error.

However, such a technique requires much labor and time, as well as a great deal of skill. This is a serious obstacle in quickly supplying woven fabrics to markets based on new specifications since the markets have been recently diversified in demand.

A typical control method and a processing station is disclosed in GB-A 2,015,775. A central control unit is provided to which individual work piece processing stations are connected by means of data collection lines and suitable interfaces. The central unit includes a storage medium holding the system program work piece-specific data and commands for the working or program blocks of the system program. Interactive exchange of data takes place over the data lines which, for effective controlling, does not only require high computing speed in the center unit, but also sufficient storage capacity in the storage medium, if a plurality of looms have to be operated. This results from the fact that the storage medium has to keep and receive data about the looms and their processing stations which data have also to be processed concurrently.

If a large number of looms have to be operated, such system will give only slow response to varying conditions, since access times and the like become too large.

Another apparatus for controlling a plurality of looms or knitting machines is disclosed in GB-A 1,591,522. Again, a common stored program is utilized for controlling said looms whereby the arrangement is such that during operation of the apparatus program information is supplied from an operating store of a host to all of the control units of the respective looms, but each control unit selects from the suppling program information only that information which is actually required. However, a specific method for optimizing parameters for weaving conditions is not disclosed in this document.

US-A 4,408 447 is related to a method which is based upon a permanent cycling communication of a central unit with individual units, namely spinning units in this case. At a given instant, a single unit only is connected to the central unit of the control system, that central unit being supplied with information data about the condition of the spinning unit connected thereto while said central unit simultaneously transmits instructions for that specific spinning unit. Meanwhile the other spinning units are operated automatically on basis of stored instructions. Accordingly, since the spinning units are served one after the other by the central unit, for optimum controlling a high processing speed is required besides a large storage medium for storing data which are related to a respective spinning unit. No optimizing method is proposed to avoid excessive efforts resulting from these computer requirements.

A similar controlling mechanism is described in US-A 4,031,718, wherein a plurality of machines is controlled at preselected times during a specific cycle by a central control unit. The main purpose of the control system described herein is to operate each machine independently of the others. However, no optimizing method is disclosed.

The article "Direct Numerical Control and Adaptative Controlan appraisal" by D.A. Milner and A.F. Oliver, published in Engineers Digest, volume 34 (1973), generally describes control methods which are commonly available without giving any specific hint to optimizing conditions and optimizing methods.

It is the object of the present invention to provide a centralized control method capable of effectively operating a plurality of looms even if characteristics peculiar to the respective looms are varied.

This object is achieved by a method as claimed in the patent claim.

According to the present invention, standard control data for controlling looms and contents thereof, i.e., peculiar style numbers representative of fabric specifications are previously stored in a memory of a host computer. The standard control data are corrected in response to variations of characteristics of the respective looms. The corrected peculiar control data are made to include loom numbers besides style numbers, and stored. The host computer, as a control data having a certain style number is designated besides the presence of the above control data is a retrieval process, and transmits the control data peculiar to the loom to the loom instead of delivering a standard control data if there in the above control data with the loom number.

With such a method, the host computer transmits control data taken in consideration of the variations, even if present, of the characteristics of the looms to the looms. Thus, flexible and effective centralized control can be achieved.

The above and other objects, features and advantages of the present invention will become more apparent from the following description when taken in conjunction with the accompanying drawings in which preferred embodiments of the present invention are shown by way of illustrative examples.
Fig. 1 is a block diagram illustrating an embodiment of a centralized control unit for looms;
Fig. 2 is a view showing an exemplary standard control data;
Fig. 3 is a view showing an exemplary control data after corrected;
Fig. 4 shows a style number list;
Fig. 5 is a flowchart illustrating operation of a host computer.

The embodiment relates to storage, read, and transfer of the optimal control data after the trial weaving.

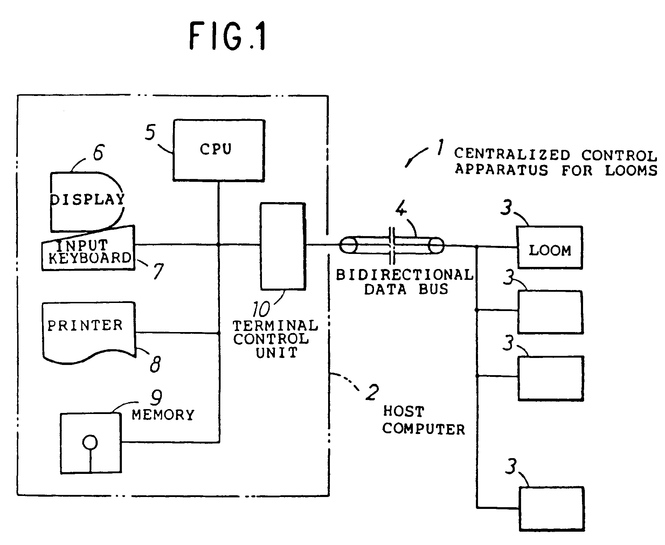

In the centralized control apparatus 1 in Fig. 1, the memory 9 in the host computer 2 has stored average or standard control data such as a number of RPM of each loom 3, a number of yarn beatings, and warp yarn tension, etc. These control data are stored together with peculicar style number representative of fabric specifications.

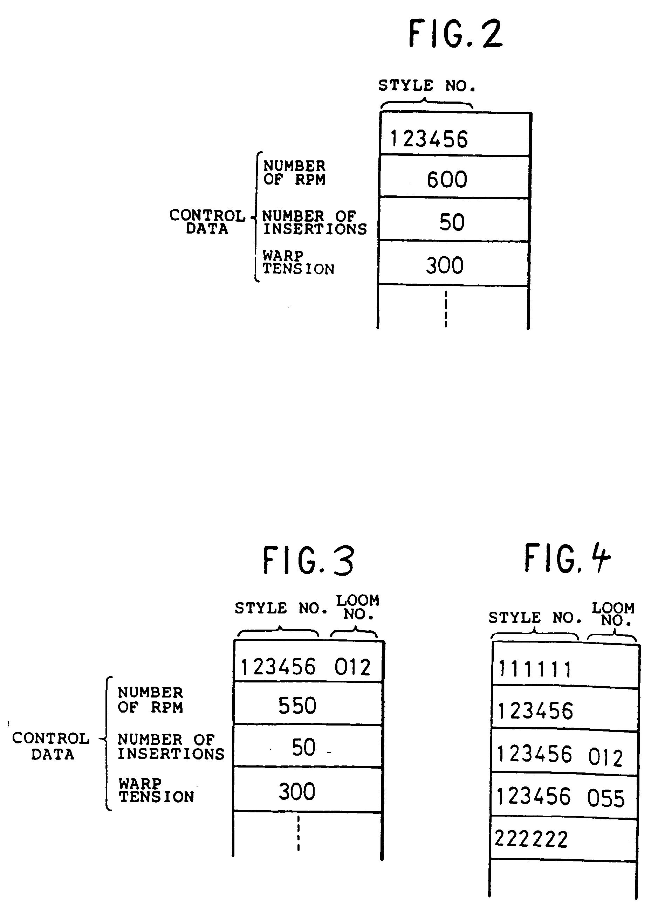

Fig. 2 shows an example of the standard control data, in which the style number is represented as "123456", for example. In addition, a number of RPM "600", a number of beatings "50", and warp yarn tension "300", etc., provide control data as target values of weaving control for looms.

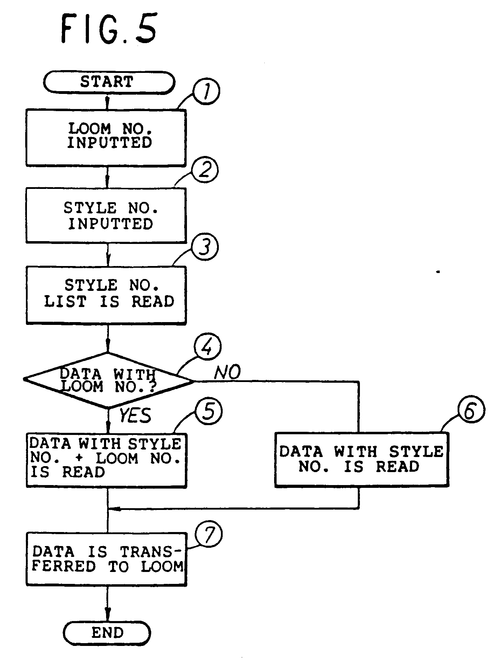

Moreover, the memory 9 included in the host computer 2 stores, besides standard control data each having certain style number as shown in Fig. 4, control data which are corrected in consideration of variations of the characteristics of the respective looms 3 corresponding to the style numbers, and which are provided with the style numbers and the respective loom numbers (machine numbers).

Fig. 3 shows an example of control data after corrected. A target value of a number of RPM has been here corrected from the standard number of RPM "600" to a peculiar value "550". The corrected control data has the style number "123456" affixed with, e.g., a loom number "012" at, e.g., the final end of the style number, whereby the control data is distinguishable from standard control data.

Fig. 4 shows a list of style numbers. Many style numbers are employed in response to fabric specifications. Standard control data are corrected in response to variations of characteristics of the respective looms 3, each of which has, for example, a three-digit loom number "012" or "055" inserted at the final end thereof.

Here, the standard control data is corrected to provide that peculiar to each loom 3 by a method wherein a control data corresponding to a style number in interest registered in the host computer corrects the control data, an optionally selected loom is numbered in the control datawhich is then registered as a control data after the correction, for a certain loom 3 is made the off-line state, and operating the loom 3 actually, the optimal value of control data is estimated while changing the control data, and thereafter the loom is returned to the on-line state and the changed control data is read in the host computer 2 in which control data of a fabric in interest and a loom are then numbered and registered.

Fig. 5 shows a procedure for operating the host compute 2 in embodying the method according to the present invention.

First, in Step 1, a number of a loom intended to be supplied with a control data, e.g., "12" is entered in the host computer 2 after starting the program, and then in Step 2, a style number representative of the control data, e.g., "123456" is entered, and successively in Step 3, a style number list as shown in Fig. 2 is read in. Next, for the read style number list, the presence of a data is decided which has the loom number "012" entered in Step 1 in the style number entered in Step 2, and if present, the operation advances to Step 5. In Step 5, if the style number with the loom number is of, for example, "123456012", the CPU 5 reads therein control data after corrected as shown in Fig. 2. By contrast, if the result in Step 4 is no, i.e., if the style number with the loom number described above has been not registered, the operation branches to Step 6, in which the host computer 2 reads in a control data having the concerning style number, i.e., a style number shown in Fig. 4 "123456". Data contents as this time is of the standard control data as shown in Fig. 2.

Thereafter, the operation proceeds to Step 7, the control data read in the host computer 2 in Step 5 or 6 is transferred to the loom 3. Thus, a series of the program steps are completed.

By this operation, the control data peculiar to the loom 3 is transmitted to the loom 3 which can weave a fabric under the optimal condition based on the control data transmitted thereto.

The control data peculiar to a loom which can be not operated satisfactorily with the standard control data due to variations of the characteristics of the looms produced thereamong is automatically transferred and set to the loom besides the standard control data. Accordingly, with the present invention, flexible centralized control is made possible without deteriorating the rates of operations of a plurality of looms even if there are variations in characteristics of the individual looms.

## Claims

1. A centralized control method for a system having a host computer and a plurality of looms controlled by control data from said host computer, said method comprising the steps of:
(a) registering in said host computer a plurality of style numbers identifying respective fabrics and registering for each said style number a set of standard control data representative of respective fabric specifications,
(b) preparing for one of said looms and a particular said style number a set of corrected control data different from said standard control data in order to compensate for loom characteristics peculiar to said one loom,
(c) associating said particular style number and a number identifying said one loom with said corrected control data and registering in said host computer said corrected control data and said associated style number and identifying number,
(d) causing said host computer to determine, when one of said style numbers is designated for one of said plurality of looms, whether corrected control data for that loom and associated with said designated style number is registered in said host computer,
(e) causing said host computer to transfer to said one of said plurality of looms said corrected control data for that loom and for said designated style number if registered in said host computer, and
(f) causing said host computer to transfer said standard control data for said designated style to said one of said plurality of looms when said host computer determines there is an absence of registration of corrected control data associated with said designated style number and that loom.

## Patentansprüche

1. Ein zentralisiertes Steuerverfahren für ein System mit einem Host-Rechner und einer Mehrzahl von von Steuerdaten des Hostrechners gesteuerten Webmaschinen, wobei das Verfahren die folgenden Schritte aufweist:
(a) Registrieren einer Mehrzahl von Typenkennzahlen, die die jeweiligen Gewebe bezeichnen, in dem Host-Rechner und Registrieren für jede der Typenkennziffern einen Satz von Standardsteuerdaten, die für die jeweiligen Gewebespezifikationen repräsentativ sind;
(b) Schaffen für eine der Webmaschinen und eine bestimmte der Typenkennziffern einen Satz von korrigierten Steuerdaten, die von den Standardsteuerdaten unterschiedlich sind, um Webeigenschaften, die der einen Webmaschine eigen sind, zu kompensieren,
(c) Zuordnen der besonderen Typenkennziffer und einer Ziffer, die die Webmaschine identifiziert, mit den zugehörigen Steuerdaten und Registrieren der korrigierten Steuerdaten und der zugehörigen Typkennziffer und der Identifizierungsziffer in dem Host-Rechner,
(d) Verursachen, daß der Host-Rechner erkennt, wenn eine der Typenkennziffern für eine aus der Mehrzahl von Webmaschinen bestimmt ist, ob die korrigierten Steuerdaten für diese Webmaschine und zugehörig mit den bestimmten Typenkennziffern in dem Host-Rechner registriert ist,
(e) Verursachen, daß der Host-Rechner zu der einen aus der Mehrzahl von Webmaschinen die korrigierten Steuerdaten für diese Webmaschine und für die angegebene Typenkennziffer überträgt, wenn diese in dem Host-Rechner registriert ist, und
(f) Verursachen, daß der Host-Rechner die Standardsteuerdaten für die bestimmte Typenkennziffer zu der einen aus der Mehrzahl von Webmaschinen überträgt, wenn der Host-Rechner erkennt, daß die Registrierung der korrigierten Steuerdaten, die der bestimmten Typenkennziffer und der Webmaschine zugehörig ist, fehlt.

## Revendications

1. Procédé de commande centralisée pour un système présentant un ordinateur hôte et une pluralité de métiers à tisser commandés par des données de commande venant dudit ordinateur hôte, ledit procédé comprenant les étapes de :
(a) enregistrement dans ledit ordinateur hôte d'une pluralité de numéros de style, identifiant des tissus respectifs et enregistrement, pour chaque numéro de style, d'un jeu de données de commande standard représentatif des spécifications respectives du tissu,
(b) préparation, pour l'un desdits métiers et pour un dit numéro particulier de style, d'un jeu de données de commande corrigées différent desdites données de commande standard de manière à compenser des caractéristiques particulières à chaque métier,
(c) association audit numéro de style particulier et à un numéro d'identification dudit métier desdites données de commande corrigées et enregistrement dans ledit ordinateur hôte desdites données de commande corrigées et dudit numéro de style associé et dudit numéro d'identification,
(d) détermination par ledit ordinateur hôte, lorsque l'un desdits numéros de style est désigné pour l'un de la pluralité desdits métiers, des données de commande corrigées concernant ce métier et associées audit numéro de style désigné enregistré dans ledit ordinateur hôte,
(e) transfert par ledit ordinateur hôte, audit métier de la pluralité, desdites données de commande corrigées concernant ce métier et ce numéro de style désigné, s'ils sont enregistrés dans ledit ordinateur hôte, ou
(f) transfert par ledit ordinateur hôte desdites données de commande standard concernant ledit style désigné à l'un parmi la pluralité desdits métiers, lorsque ledit ordinateur hôte détermine qu'il y a absence d'enregistrement de données de commande corrigées associées audit numéro de style désigné et concernant ce métier.
